(19) **Europäisches Patentamt**

**European Patent Office**

**Office européen des brevets**

(11) **EP 0 979 994 A2**

(12) **EUROPEAN PATENT APPLICATION**

(43) Date of publication:
**16.02.2000 Bulletin 2000/07**

(51) Int. Cl.$^7$: **G01N 21/35**

(21) Application number: **99115824.7**

(22) Date of filing: **11.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.08.1998 IT TO980706**

(71) Applicant:
**Instituto Elettrotecnico Nazionale Galileo Ferraris**
**10100 Torino (IT)**

(72) Inventors:
• **Lerondel, Gilles**
  **76560 Doudeville (FR)**
• **Amato, Giampiero**
  **10143 Torino (IT)**
• **Boarino, Luca**
  **10100 Trino (IT)**

(74) Representative:
**Dini, Roberto, Dr. Ing.**
**Via Castagnole, 59**
**10060 None (Torino) (IT)**

(54) **Porous material optical gas sensing device**

(57)    An optical gas sensing device utilizing the gas spectral absorption and providing at least a radiation source and a sensing element manufactured at least partially from a porous material. According to the present invention, said optical gas sensing device (GS;GS1;GS2;GS3) also comprises at least a resonant optical cavity (BR;BR1).

Fig. 1

EP 0 979 994 A2

Printed by Xerox (UK) Business Services
2.16.7/3.6

**Description**

The present invention relates to optical gas sensing device utilizing the gas spectral absorption and providing at least a radiation source and a sensing element manufactured at least partially in a porous material.

Various types of solid-state gas sensing devices are known, where the variation of physical properties of a material are used to detect the presence of gas. For instance, gas sensing devices based on semiconducting oxides such as tin dioxide are known, where the gas setting on the crystal borders of said material will change the conduction properties of the latter, so that it can be detected.

On the other hand, other gas sensing devices are known, which use the optical properties of a material to detect the presence of gas. Optical structures are used for instance for gas detection, such as gas sensing filters based on the coincidence between the optical absorption lines of the gas molecules and the filter spectral response.

Porous silicon is for instance a material employed to manufacture gas sensing devices. Porous silicon and porous materials in general can be utilized due to the large surface they obtain by porosity. Therefore, when the porous silicon pores are wetted through a chemical or electrochemical wetting process with the above semiconductor oxides, a high sensitivity sensing device will be obtained. However, such a wetting process is efficient if the pores have a large size, i.e. their diameter D exceeds 100 nm, which obviously reduces the specific surface and sensitivity of the sensing device itself. In the instance of a nanoporous material (D < 5 nm), wetting processes become difficult because the wetting media may obstruct the pores since the initial process stages, thus hindering a complete penetration in the layer of porous material. Therefore it is not possible to take advantage of the possibilities offered by the large specific surface of a porous material, especially porous silicon, for which a consolidated production technology has developed in the last few years. This type of sensing devices is also scarcely selective compared to various gas types and, anyway, an increased selectivity can only be obtained through a reduced sensitivity level.

As known, passive optical gas sensing devices are manufactured using porous silicon optical structures as a selective reflector to obtain a spectral selectivity of gas molecules. Reference is made for instance in this connection to a publication by S. Hilbrich, R. Arens-Fischer, L. Küpper, W. Theiss, M. G. Berger, M. Krüger and M. Thönissen in *Thin Solid Films*, 297, 250 (1997).

Manufacture of active optical gas sensing devices is also known, based on the refraction index variation of porous silicon due to the gas molecules adsorption on the inner surface of porous silicon pores. Such a refraction index variation is detected studying the position change of interference fringes either during their transmission or reflection. However, also said sensing devices are not very sensitive and additionally require a spectrometer for evaluating fringes shift.

It is the object of the present invention to solve the above drawbacks and provide an optical gas sensing device, having a more efficient and improved performance.

In this frame, it is the main object of the present invention to provide an optical gas sensing device, which can ensure a high sensitivity and high selectivity simultaneously.

A further object of the present invention is to provide an optical gas sensing device, which is cost effective and has a high integrability with the devices based on silicon technology.

In order to achieve such aims, it is the object of the present invention to provide an optical gas sensing device, incorporating the features of the annexed claims, which form an integral part of the description herein.

Further objects, features and advantages of the present invention will become apparent from the following detailed description and annexed drawings, which are supplied by way of non limiting example, wherein:

- Figure 1 shows a basic diagram of an optical gas sensing device according to the present invention;
- Figure 2a shows a spectral diagram of the optical response of a component of the optical gas sensing device according to the present invention;
- Figure 2b shows a spectral diagram of a gas molecule absorption as detectable through the optical gas sensing device according to the present invention;
- Figure 3a shows a basic diagram of an embodiment of the optical gas sensing device represented in Figure 1;
- Figure 3b shows a basic diagram of an embodiment of the optical gas sensing device represented in Figure 3a;
- Figure 4a shows a basic diagram of a second embodiment of the optical gas sensing device represented in Figure 1;
- Figure 4b shows a basic diagram of a third embodiment of the optical gas sensing device represented in Figure 1.

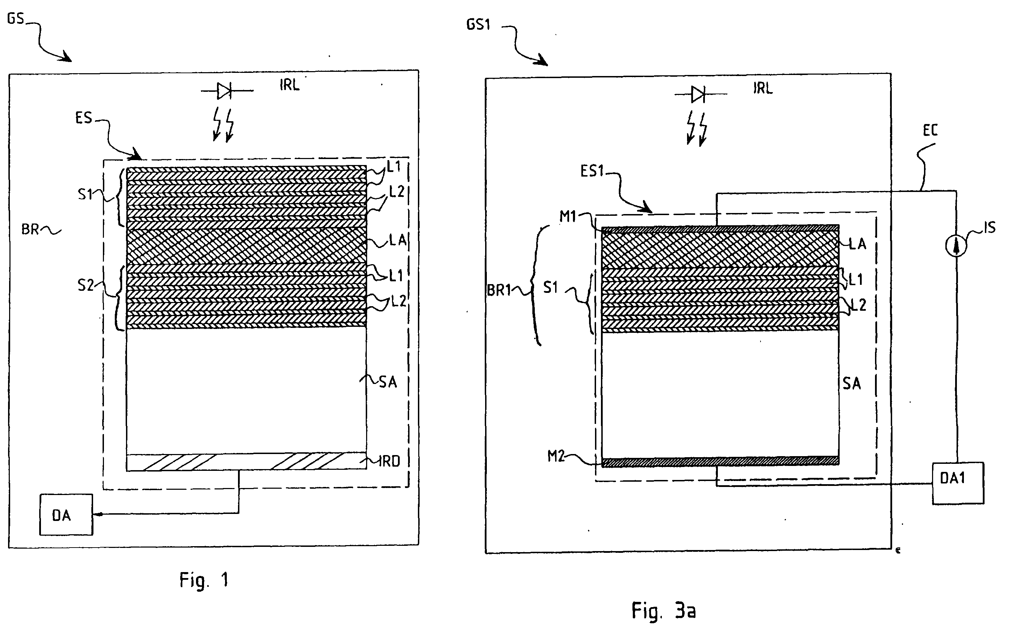

Figure 1 represents a gas sensing device GS according to the present invention.

Said gas sensing device GS comprises a light emitting diode IRL, which emits radiations in the infrared field, a silicon gas sensing element ES, a radiation sensor IRD, which is also sensitive to radiations in the infrared field, as well as a data acquisition and processing device DA.

The gas sensing element is obtained through an intermediate porous silicon layer LA, comprised in a Bragg reflector cavity BR. Such a Bragg reflector cavity BR consists of two Bragg reflectors S1 e S2. Each one of said Bragg reflectors S1 and S2 is obtained through a porous silicon superlattice, consisting of a set of alternated higher porous layers L1 and less porous layers L2. The higher porous layer L1 is a porous silicon layer with 72% porosity with an infrared refraction index n of 1,43. The less porous layer L2 is a porous silicon layer with 57% porosity with an infrared refraction index n of 1,84. Said refraction indexes are chosen for a maximum refraction index modulation.

Thicknesses of the higher porous layers L1 and less porous layers L2 are chosen to reach the known Bragg condition

$$n*d=\lambda_L/2$$

where d is the thickness periodicity of the superlattice that forms the Bragg reflector S1 or S2, whereas $\lambda_L$ is the work wavelength whereto the microcavity BR operates; in this instance $\lambda_L$ value is 4 $\mu$m.

Both the microcavity BR and intermediate layer LA are obtained by electrochemical dissolution of a cristalline silicon substrate layer SA, which is a low doping p-typesubstrate, i.e. 4 to 6 Ohm resistivity and transparent in the infrared field. The microcavity BR and intermediate layer LA are obtained from said substrate layer SA through electrochemical dissolution, using a solution containing 35% in volume of hydrofluoric acid, 30% ethanol and 30% deionized water. Superlattices composing Bragg reflectors L1 and L2 are obtained by current modulation during the electrochemical dissolving process. A current density of 16,6 mA/cm$^2$ is used for the less porous layer L2 and a current density of 333 mA/cm$^2$ for the higher porous layer L1. The intermediate layer LA has a thickness of 1.09 $\mu$m.

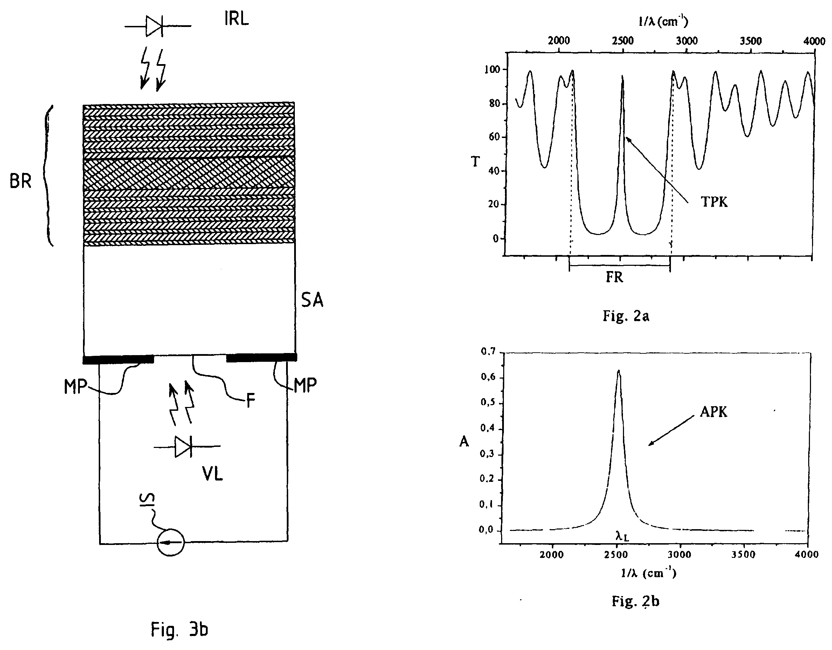

Figure 2a shows a spectral diagram of the optical response of the microcavity BR, which reports transmittance T as a function of the inverse of the wavelength $\lambda$, i.e. of the frequency. As it can be noticed, the microcavity BR determines an interval of forbidden frequencies FR, where transmittance T is substantially null. During said interval of forbidden frequencies FR only one resonance peak alone TPK is available, which is centered at 2500 cm$^{-1}$, for which the transmittance T is at its maximum.

Figure 2b shows a spectral diagram of the absorbance A of a gas molecule $CO_2$ as a function of the inverse of the wavelength $\lambda$. As it can be noticed, there is an absorption peak APK due to a vibrational mode of the gas molecule, which is also centered on a frequency of 2500 cm$^{-1}$, and is corresponding to the inverse the work wavelength $\lambda_L$.

Operation of the gas sensing device GS according to the present invention is as follows:

- the light emitting diode IRL emits a large spectrum infrared radiation;
- if there is no presence of gas, infrared radiation absorption of the gas sensing element ES is irrelevant, so that the radiation detector IRD will measure a first incident infrared radiation intensity, whose value is either known or can be obtained anyway through appropriate calibration procedures;
- if there is a presence of gas, then the gas sensing element ES has an infrared radiation absorption, which is determined by the absorption peak APK having reached the resonance peak TPK. Therefore, the radiation detector IRD will detect a second incident infrared radiation intensity, which is considerably lower than the first infrared radiation intensity, in virtue of said gas absorption enhanced by the microcavity BR;
- the data acquisition and processing device DA analyses the intensity change detected by the radiation detector IRD and as programmed it will determine the alarms and calculate the quantity of gas.

It is obvious that many opportunities to handle the information generated by the gas device GS according to the present invention can be originated by the various types of radiation detectors IRD and data acquisition and processing devices DA, as well as by their combination. In particular, gas absorption inside the microcavity BR itself will determine a frequency shift of the resonance peak TPK. Knowing the response curve of the radiation detector IRD it is also possible to calculate the frequency displacement or shift of the resonance peak TPK obtaining a second information on the quantity of gas available.

The thickness of the active layer LA is particularly significant to determine the frequency of the resonance peak TPK. Thickness changes less than half work wavelength $\lambda_L$ determine a frequency shift of the resonance peak within the interval of forbidden frequencies FR, s allowing to change the selectivity of the gas sensing device GS.

Figure 3a shows a basic diagram of a gas sensing device GS1, which is a further embodiment of the gas sensing device GS represented in Figure 1. Said gas sensing device GSL comprises a gas sensing element ES1, which comprises a half microcavity BR1 obtained from the substrate layer SA and through the lower Bragg reflector alone S1, whereas a semitransparent metal layer M1 deposited on the active layer LA forms the second reflector and completes the half microcavity BR1. The substrate layer SA is coated on its lower side by an aluminum metal layer M2.

A current source IS connected to the metal layer M1 is acting as a first electrode, whereas the metal layer M2 forms the second electrode of an electric circuit EC, which further comprises a data acquisition and processing device DA1 apt to measure the current flowing through the electric circuit EC.

The gas sensing device GS1 is a passive gas sensing device, since the metal layer M1 hinders gas adsorption inside the half microcavity BR1. Therefore its operation consists of the combination of two operating procedures: a first operation procedure as a resonant optical filter for the radiation emitted by the light emitter diode IRL and a second operation procedure as a photodetector. As a matter of fact, a connection between the metal layer M2 and the substrate layer SA will determine a high density of surface electronic states on their interface, which is typical for aluminum-silicon contacts and more in general for metal-semiconductor junctions originating Schottky diodes. Said surface electronic states inject holes, which usually change the current flowing in the device. Under illumination said surface electronic states are excited according to the intensity of the incident radiation, which causes their current change effect to be progressively eliminated. This current change may then be measured for measuring the radiation intensity across the device, i.e. a photocurrent is measured as a function of the incoming radiation intensity on the junction between the metal layer M2 and substrate layer SA. Said photocurrent is measured by the data acquisition and processing device DA1.

On the other hand, the gas sensing device GS1 can be applied only in the first procedure eliminating the second metal layer M2 and replacing it with the radiation detector IRD shown in Figure 1, which corresponds to the use of the encapsulated half microcavity BRL, including the substrate layer SA having an optical filter function only. Said first procedure may be advantageous in the presence of specially high gas concentrations, whereas the second procedure may be applied for intermediate gas concentrations.

Figure 3b shows partially a gas sensing device GS1', wherein a gas sensing element ES1' also encapsulated and passive like the gas sensing device GS1 is contained, but using the microcavity BR, whereas on the substrate layer SA two electrodes MP are arranged in a planar configuration. Thus, the current injected through the current source IS will only flow through the substrate layer.

Between both electrodes MP a window F is defined, through which the radiation emitted by a visible light source VL ispassing.

Thus, the employment of surface electronic states on the aluminum-silicon interface, in this specific case between the substrate layer SA and the layer between the electrodes MP showing a rectifying behaviour, can be executed using in addition to the light emitting diode IRL the visible light source VL, which introduces a change of the substrate layer conductivity SA, since crystalline silicon is not transparent to the visible light. Operation is opposed to the gas sensing device GS1: in this instance the surface electronic states have a limiting effect of the photocurrent, since they act as traps for the holes. This effect depends on the number of saturated states due to the intensity of the infrared radiation emitted by the light emitting diode IRL and let through by the microcavity BR, to be measured.

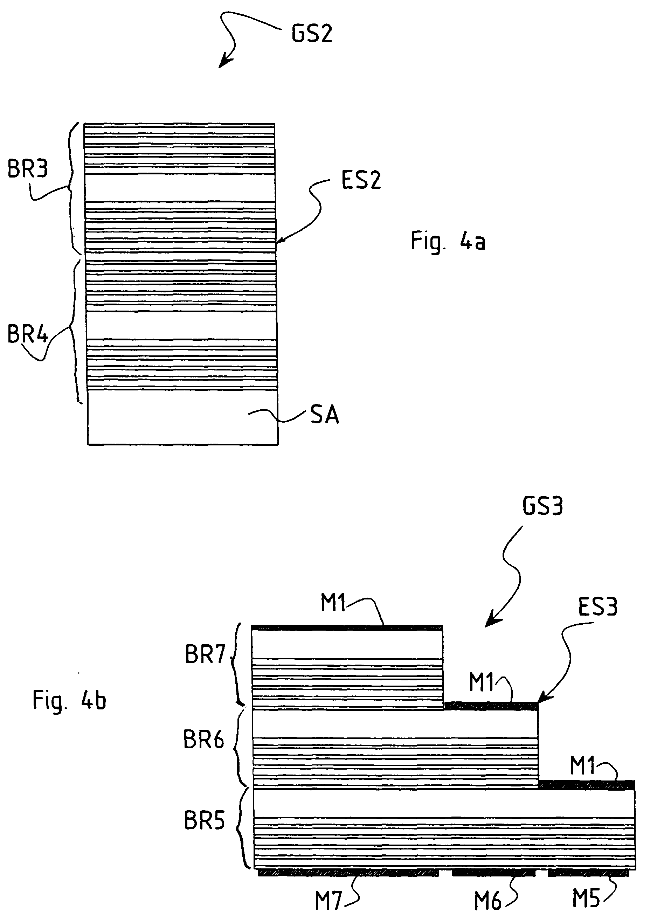

Figure 4a shows a gas sensing element ES2 pertaining to a gas sensing device GS2, consisting of two overlapped microcavities BR3 and BR4, similar to the microcavity BR of Figure 2. Said gas sensing device GS2, easily obtainable through the electrochemical dissolving processes described above, allows to detect two gases having two different absorption frequency peaks by simply setting different thicknesses for the active layers should said absorption peaks be close, or using two microcavities BR3 and BR4 with entirely different features. Should it be desired to also obtain selectivity for said two gases besides their sensitivity, two radiation sources having different frequencies can be used, eventually in conjunction with lock-in type modulation techniques.

Moreover, should microcavities BR3 and BR4 have the same features, i.e. the same frequency of the resonance peak TPK, the resonance effects will combine together to enhance the absorption effect and make the sensing device GS2 more sensitive.

The gas sensing device GS2 consists substantially of gas sensing devices series connected.

On the other hand, also passive gas sensing devices can be series connected, such as gas sensing elements ES1 and ES1', as previously described.

Figure 4b shows a gas sensing element ES3 pertaining to a gas sensing device GS3, consisting of three overlapped microcavities BR5, BR6 and BR7 with a decreasing surface. Said microcavities BR5, BR6 and BR7 are similar to the half microcavity BR1 and bear semitransparent metal layers on their top encapsulating them. Said microcavities BR5, BR6 and BR7 have each one their own resonance frequency TPK and interval of forbidden frequencies FR, which differ from the other microcavities, so as to have each microcavity sensing a different gas.

Metal layers M5, M6, M7 representing the electrodes corresponding to each microcavity BR5, BR6 and BR7 are then arranged on the lower side to collect the corresponding photocurrent originated by each microcavity.

Therefore, the gas sensing device GS3 has a gas selectivity determined by the presence of an electrodes array, i.e. metal layers M5, M6, M7, each one of them corresponding to a different photocurrent and consequently to a different signal. The gas sensing device GS3 consists substantially of three gas sensing elements in parallel.

Obviously, also active gas sensing devices can be arranged in parallel, such as the sensing device GS previously described.

In a more general way, it will also be possible to have bidimensional arrays of gas sensing device GS1 or GS2, or both types together.

According to the above description the features of the present invention are clear and also its advantages will be clear.

The optical gas sensing device according to the present invention combines advantageously a high sensitivity due to the extremely wide internal surface of porous silicon with a high selectivity through introduction of the microcavities and consequently the possibility of setting a resonance absorption that can be defined in advance for any spectral interval.

Moreover, the optical gas sensing device according to the present invention is advantageously based on silicon technology, i.e. utilizing all associated production processes, which are highly refined and stabilized by now, e.g. with respect to metallizing processes, chemical attacks, integration of pluralities of devices on the same silicon chip, availability of analysis circuits and processing of already integrated data.

Finally, the optical gas sensing device as provided in the embodiment of a sensing device with conductivity measurement according to the present invention has a low circuitry complexity, i.e. easy circuit implementation and repetition, as well as a low cost. In particular, the aluminum electrode on the substrate backside is already available being deposited there to execute the electrochemical dissolution process originating the porous silicon layers.

It is obvious that many changes are possible for the man skilled in the art to the optical gas sensing device described by way of example, without departing from the novelty spirit of the innovative idea, and it is also clear that in practical actuation of the invention the components may often differ in form and size from the ones described and be replaced with technical equivalent elements.

For instance, when using the encapsulated gas sensing device in an optical filter procedure, encapsulation may be performed not only using metal layers, but with any layer isolating the microcavity from the gas, such as silicon oxide layers or transparent gels in the infrared field.

The gas sensing devices described above can be employed in a reflection procedure, i.e. collecting the radiation reflected by the microcavities. This may prove particularly advantageous if the substrate used is a $p^+$ type, i.e. heavily doped, as there will be an excessive absorption by the substrate if the sensing device operates in transmission.

Other porous semiconductor materials technically available and more suitable for other wavelength fields can be eventually used besides porous silicon. For instance, porous silicon carbide can be used for shorter wavelengths.

**Claims**

1. An optical gas sensing device utilizing the gas spectral absorption and providing at least a radiation source and a sensing element manufactured at least partially in a porous material, characterized in that said optical gas sensing device (GS;GS1;GS2;GS3) also comprises at least a resonant optical cavity (BR;BR1).

2. An optical gas sensing device according to claim 1, characterized in that said resonant optical cavity is comprised in the sensing element (ES; ES1; ES2; ES3).

3. An optical gas sensing device according to claim 2, characterized in that said resonant optical cavity (BR; BR1) has a resonance wavelength ($\lambda_L$) substantially equal to a typical wavelength of an absorption peak (APK) of the gas to be detected.

4. An optical gas sensing device according to claim 3, characterized in that said resonant optical cavity comprises a first superlattice (S1) in porous material creating a Bragg reflector and semireflecting means (S2;M1)

5. An optical gas sensing device according to claim 4, characterized in that said semireflecting means (S2, M1) consist of a second superlattice in porous material (S2).

6. An optical gas sensing device according to claim 5, characterized in that an active layer of porous material (LA) is comprised between the first superlattice in porous material (S1) and the second superlattice in porous material (S2).

7. An optical gas sensing device according to claim 6, characterized in that said superlattice in porous material (S1), said second superlattice in porous material (S2) and said active layer in porous material (LA) are arranged on a non-porous substrate layer (SA).

8. An optical gas sensing device according to claim 7, characterized in that the sensing element (ES) comprises said first superlattice in porous material (S1), said second superlattice in porous material (S2), said active layer in porous material (LA) and said non-porous substrate layer (SA).

9. An optical gas sensing device according to claim 8, characterized in that said sensing element (ES) is arranged between the radiation source (IRL) and a radiation detector (IRD).

10. An optical gas sensing device according to claim 4, characterized in that said semireflecting means (S2, M1) are obtained through a semitransparent metal layer (M1).

11. An optical gas sensing device according to claim 10, characterized in that an active layer in porous material (LA) is comprised between said superlattice in porous material (S2) and said semitransparent metal layer (M1).

12. An optical gas sensing device according to claim 11, characterized in that said superlattice in porous material (S2), said semitransparent metal layer (M1) and said active layer in porous material (LA) are arranged on a non-porous substrate layer (SA) placed on a second metal layer (M2).

13. An optical gas sensing device according to claim 12, characterized in that said superlattice in porous material (S2), said semitransparent metal layer (M1) and said active layer in porous material (LA), said porous active layer (LA), said non-porous substrate layer (SA) and said second metal layer (M2) form the sensing element (ES1).

14. An optical gas sensing device according to claim 13, characterized in that said sensing element (ES1) receives the radiation emitted by the radiation source (IRL) and is connected through the semitransparent metal layer (M1) and second metal layer to a current source (IS) and an acquisition device (DA1).

15. An optical gas sensing device according to claim 4, characterized in that it has a sensing element (ES2) obtained through microcavities (BR3, BR4) in series.

16. An optical gas sensing device according to claim 4, characterized in that it has a sensing element (ES3) obtained through microcavities (BR5, BR6, BR7) in parallel.

17. A gas detecting method utilizing a solid-state sensing device, which is sensitive to optical gas absorption at a determined absorption wavelength, characterized in that it uses a resonant microcavity in porous material tuned on the gas absorption wavelength.

18. A gas detecting method according to claim 17, characterized in that it provides the following steps:

a) emitting an infrared radiation through a radiation source (IRL) and conveying it on the sensing element (ES, ES2, ES3);
b) measuring through a radiation detector (IRD) the intensity of the infrared radiation conveyed through the sensing element (ES, ES2, ES3);
c) associating a first intensity of infrared radiation incident to a non presence of gas;
d) associating second intensities of the incident infrared radiation, which are lower than the first intensity of infrared radiation, to the presence of gas.

19. A gas detecting method according to claim 17, characterized in that it provides the following additional step:

e) employing an acquisition and processing device (DA) to analyze the intensity change detected by the radiation detector (IRD) and calculate the quantity of gas available according to the programming of said acquisition and processing device (DA).

20. A gas detecting method according to claim 18, characterized in that it provides the following additional step:

f) employing an acquisition and processing device (DA) to measure the work wavelength shift of the resonant cavity (BR).

21. A gas detecting method according to claim 17, characterized in that the sensing element (ES1, ES3) is isolated from the gas through a semitransparent sealing layer (M1).

22. A gas detecting method according to claim 20, characterized in that it provides the following steps:

a) emitting an infrared radiation through a radiation source (IRL) and making it incide on the sensing element (ES1, ES3);
b) injecting a current through a current source (IS) through metal layers (M1, M2; M1, M5, M6, M7) comprised in said sensing element (ES1, ES3);
c) measuring the photocurrent generated on the interface between a substrate layer (SA) and one of the metal layers (M2; M5, M6, M7) by the incident radiation on the sensing element (ES1, ES3).

23. A gas detecting method according to claim 21, characterized in that it provides the following steps:

a) emitting an infrared radiation through a radiation source (IRL) and conveying it on the sensing element (ES1, ES3);
b) measuring through a radiation detector (IRD) the intensity of the infrared radiation conveyed through the sensing element (ES1, ES3);
c) associating a first intensity of infrared radiation incident to a non-presence of gas;
d) associating second intensities of incident infrared radiation, which are lower than the first intensity of infrared radiation in the presence of gas.

**24.** A detecting device of radiation absorption in a silicon structure, characterized in that it comprises a radiation source (IRL; VL), electric connecting terminals (M1, M2, MP) forming a Schottky diode with the silicon structure, a current source (IS) connected between said electric current terminals (M1, M2, MP) and measuring means of the silicon structure resistance (DA).

Fig. 1

Fig. 3a

EP 0 979 994 A2

Fig. 3b

BR

MP

IS

VL

F

MP

SA

IRL

Fig. 2a

T

0
20
40
60
80
100

2000
2500
3000
3500
4000

$1/\lambda$ (cm$^{-1}$)

FR

TPK

Fig. 2b

A

0,0
0,1
0,2
0,3
0,4
0,5
0,6
0,7

2000
2500
3000
3500
4000

$1/\lambda$ (cm$^{-1}$)

$\lambda_L$

APK

GS2

BR3

ES2

Fig. 4a

BR4

SA

GS3

M1

ES3

BR7

Fig. 4b

M1

BR6

M1

BR5

M7

M6

M5